# EUROPÄISCHE PATENTANMELDUNG

(11) **EP 4 480 748 A1**
(43) Veröffentlichungstag der Anmeldung: **25.12.2024**
(21) Anmeldenummer: 24183786.3
(22) Anmeldetag: 21.06.2024
(51) Int. Cl.: B60N 2/20, B60N 2/433, A01M 31/02, A47C 4/22, A47C 7/40, B62B 9/10

(54) **MODULARER SITZ**

(30) Priorität: 21.06.2023 DE 202023103449 U; 07.09.2023 DE 102023105155
(71) Anmelder: Croozer GmbH, 50354 Hürth (DE)
(72) Erfinder: MÜHLER, Michel, 50126 Bergheim (DE); STEIN, Farid, 51067 Köln (DE)
(74) Vertreter: Lenzing Gerber Stute

(57) **Zusammenfassung**

Die vorliegende Erfindung betrifft einen modularen Sitz (1) für ein Leichtfahrzeug oder einen Anhänger dafür, mit einer Sitzfläche (3) und einer Rückenlehne (2), deren Winkel zueinander einstellbar ist, und mit Elementen zum Befestigen des Sitzes (1) im Leichtfahrzeug oder dem Anhänger, sowie mit mindestens einem auf Zug belastbaren Sicherungselement (7), mit dem die Rückenlehne (2) und/oder die Sitzfläche (3) gegen ein Auslenken in mindestens einer Richtung gesichert werden können. Der erfindungsgemäße Sitz weist eine oder mehrere sich unterhalb der Sitzfläche (3) und/oder der Rückenlehne (2) erstreckende Streben auf, wobei das Sicherungselement (7) mittelbar oder unmittelbar an einer der Streben gegengelagert ist. Damit wird eine bessere Funktionalität des Sitzes erreicht.

## Beschreibung

Die vorliegende Erfindung betrifft einen modularen Sitz für ein Leichtfahrzeug oder einen Anhänger dafür, mit einer Sitzfläche und einer Rückenlehne, deren Winkel zueinander einstellbar ist, und mit Elementen zum Befestigen des Sitzes im Fahrzeug, sowie mit mindestens einem auf Zug belastbaren Sicherungselement, mit dem die Rückenlehne und/oder die Sitzfläche gegen ein Auslenken in mindestens einer Richtung gesichert werden können. Die Erfindung betrifft auch einen Fahrradanhänger mit einem erfindungsgemäßen modularen Sitz.

Unter einem Leichtfahrzeug wird ein mit Muskelkraft betreibbares Fahrzeug, insbesondere ein Fahrrad oder ein Tricycle, die auch elektromotorisch unterstützt sein können verstanden, aber auch ein Kleinkraftrad, wie etwa ein Moped, ein Mofa oder ein Roller.

Fahrradanhänger, aber auch Transporträder, insbesondere solche für den Transport von Kindern, erfreuen sich zunehmender Beliebtheit. Es gibt z.B. Kinderfahrradanhänger, die ein Chassis und eine Fahrgastzelle aufweisen, in der je nach Größe des Anhängers ein Einzelsitz oder ein Doppelsitz zum Transport eines oder zweier Kinder vorgesehen ist. Das Chassis wird üblicherweise durch eine Rahmenkonstruktion gebildet, kann aber beispielsweise auch aus einer Wanne aus Kunststoff oder Aluminium bestehen. An das Chassis ist meist eine faltbare, die Fahrgastzelle bildende Rahmenkonstruktion montiert, wobei dann Fahrgastzelle bzw. Chassis und Fahrgastzelle von einem oder mehreren flexiblen Stoffen oder Folien umspannt sind. Die Sitze sind beispielsweise in der Fahrgastzelle verspannte Tuchsitze, oder sie sind als Schalensitze ausgebildet und seitlich in der Fahrgastzelle verankert. Ein Kinderfahrradanhänger mit verspanntem Tuchsitz ist beispielsweise in der EP 1 398 260 A2 offenbart.

Es gibt auch Kinderfahrradanhänger mit Kindersitzen, deren Rückenlehne verstellbar ist. Ein einfaches Beispiel hierfür ist aus der deutschen Gebrauchsmusterschrift DE 92 15 797 bekannt. Darin ist ein Lastenanhänger mit einer Ladefläche sowie seitlichen, die Ladefläche eingrenzenden Wandungen offenbart. In den durch die Seitenwandungen gebildeten Ecken sind Verankerungen vorgesehen, in denen ein sogenannter Überrollbügel lösbar befestigt werden kann. Am Überrollbügel sind verschiedene Befestigungspunkte vorgesehen, derart, dass ein Kindersitz in den Überrollbügel eingehängt werden kann, wobei die Position der Rückenlehne zur Sitzfläche des Kindersitzes einstellbar ist. Für den Transport von Babys, die in einer Liege-/Sitzposition transportiert werden müssen, sind die bekannten Sitze mit verstellbarer Rückenlehne jedoch nicht geeignet.

Aus der DE 20 2021 100 157 U1 ist eine Sitzanordnung für den Transport von Personen bekannt, bei der der Sitz bzw. die Rückenlehne durch eine Matte gebildet ist. Die Sitzanordnung weist zudem ein Spannelement zur Aufnahme von Zugspannungen auf, um die Matte in einer bestimmten dreidimensionalen Anordnung zu halten bzw. aufzuspannen.

Aus der DE 20 2021 100 160 U1 ist eine weitere Sitzanordnung bekannt, bei der der Winkel zwischen der Rückenlehne und der Sitzfläche veränderbar ist. Die Sitzanordnung weist dazu einen Träger mit zwei Trägerteilen auf, wobei die Rückenlehne und die Sitzfläche jeweils von einem der Trägerteile gehalten ist und der Winkel und die Trägerteile mittels eines Gelenks zueinander verstellt werden können.

Nachteilig an den aus dem Stand der Technik bekannten Sitzen ist es, dass sie entweder fest in einem Fahrzeug montiert sind, oder dass der Ein- und Ausbau nur mit verhältnismäßig großem Aufwand erfolgen kann.

Aufgabe der Erfindung ist es, einen Sitz der eingangs genannten Art mit einer verbesserten Funktionalität bereit zu stellen.

Diese Aufgabe wird mit einem Sitz der eingangs genannten Art gemäß Anspruch 1 dadurch gelöst, dass der Sitz eine oder mehrere sich unterhalb der Sitzfläche und/oder der Rückenlehne erstreckende Streben aufweist, wobei das Sicherungselement mittelbar oder unmittelbar an einer der Streben gegengelagert ist.

Unter einem Sicherungselement wird hier und im Folgenden ein Element verstanden, das geeignet ist, die Rückenlehne und/oder die Sitzfläche relativ zur Strebe in mindestens einer Richtung gegen ein Auslenken zu sichern, und zwar auch dann, wenn beispielsweise im Fall eines Auffahrunfalls aufgrund des abrupten Abbremsens hohe Trägheitskräfte auf ein im Sitz sitzendes und darin über Gurte gesichertes Kind und damit auf die Rückenlehne wirken. Üblicherweise werden als Sicherungselemente Gurte zum Abspannen und damit zum Sichern der Sitzfläche und/oder der Rückenlehne verwendet. Es ist aber beispielsweise ebenso möglich, auf Zug und Druck belastbare Stäbe anstelle von Gurten einzusetzen, um Sitzfläche und/oder Rückenlehne in ihrer Position sicher zu halten.

Mit den sitzeigenen Streben ist es erfindungsgemäß möglich, die Sitzfläche und/oder die Rückenlehne an Teilen des Sitzes selbst zu sichern, eine Verspannung an Teilen des Leichtfahrzeugs oder Anhängers ist nicht mehr notwendig. Dadurch wird das Einsetzen und Herausnehmen des Sitzes aus dem Leichtfahrzeug bzw. Anhänger ganz erheblich vereinfacht. Dies spielt insbesondere dann eine Rolle, wenn das Leichtfahrzeug oder der Anhänger für eine Vielzahl von Einsatzwecken verwendet werden soll, beispielsweise für den Transport von Kindern, Tieren (Hunden) und/oder Gegenständen. Durch das vereinfachte Einsetzen und Herausnehmen des Funktionsmoduls Sitz wird der praktische Nutzen des Leichtfahrzeugs bzw. des Anhängers ganz wesentlich erhöht.

Insbesondere ist es dadurch auch möglich, dass verschiedene gleichermaßen erfindungsgemäße Sitze bereitgestellt werden, wobei der Anwender auf Grund der modularen Bauweise die Wahl aus mehreren Sitzen hat und diese bei Bedarf schnell wechseln kann. Durch die modulare Bauweise kann ein Sitz, der für den Transport eines Kindes ausgelegt ist, bei Bedarf einfach und schnell aus dem Anhänger genommen werden oder durch einen anderen ebenfalls modularen Sitz ersetzt werden, der beispielsweise zwei Sitzflächen bietet. Es können aber auch zwei Sitze miteinander getauscht werden, wobei ein Sitz auf ein erstes Kind eingestellt ist und der andere Sitz auf ein zweites Kind eingestellt ist. Somit kann der Anhänger auf einfache Weise an die gewünschte Funktion angepasst werden.

In einer vorteilhaften Ausführungsform bilden die Streben einen u-förmigen oder geschlossenen Rahmen, wobei am Rahmen Befestigungspunkte zum Befestigen des Rahmens im Fahrzeug vorgesehen sind. Dadurch kann der Sitz beispielsweise am Boden des Leichtfahrzeugs oder Anhängers befestigt bzw. davon gelöst werden. Die Befestigungspunkte können beispielsweise so ausgeformt sein, dass sie mit entsprechend geformten Haltern von Pfosten zusammenwirken, die im Boden des Leichtfahrzeugs oder Anhängers verankert werden können. Unter Befestigungspunkten sind genauso auch Pfosten zu verstehen, die am Rahmen angeordnet sind und am Boden des Leichtfahrzeugs oder Anhängers verankert werden können. Alternativ können die Befestigungspunkte Bestandteile von Haltemitteln sein, die geeignet sind, am Leichtfahrzeug oder Anhänger so befestigt zu werden, dass eine sichere Verankerung des Sitzes am bzw. im Leichtfahrzeug bzw. Anhänger möglich ist, wie beispielsweise Klemmen, Steckverbindungen, Spangen, Rastelemente, Schlaufen.

Abhängig von der Wahl der Befestigungsmittel kann die Befestigung am Fahrzeug je nach Anwendungsfall besonders einfach, besonders sicher oder besonders platzsparend erfolgen, so dass der modulare Sitz an spezielle Anforderungen angepasst werden kann.

Selbstverständlich ist auch die Kombination verschiedener Befestigungsmittel denkbar und möglich.

In einer bevorzugten Ausführungsform weist der modulare Sitz ein lösbares Sperrelement zum Feststellen des Sicherungselementes auf. Durch das lösbare Sperrelement kann das Sicherungselement in verschiedenen Lagen oder Positionen zur Sicherung des Sitzes festgestellt werden, um die Sitzfläche und/oder die Rückenlehne in verschiedenen Positionen zueinander zu sichern.

Als Sicherungselement besonders geeignet ist ein Abspannelement wie beispielsweise ein Seil oder ein Gurt. Das Abspannelement kann zwischen einer Strebe und der Rückenlehne gespannt sein und die Rückenlehne in zumindest eine Richtung relativ zum Rahmen sichern. Ein Seil oder ein Gurt haben den Vorteil, dass sie flexibel, sehr reiß- und verschleißfest und leicht sind und aufgrund ihrer Flexibilität ein Zusammenfalten des Sitzes ermöglichen, ohne dass sie vom Sitz abgenommen werden müssen.

Bei einer weiteren Ausführungsform weist das Sperrelement einen selbsthemmenden Mechanismus auf, welcher insbesondere in der Art einer Gurt- oder Seilbremse ausgeführt sein kann. Ein selbsthemmender Mechanismus hat den Vorteil, dass die Sicherung fester wird, desto mehr Zug auf dem Sicherungselement lastet. Somit ist gewährleistet, dass das Sicherungselement auch bei sehr starken Beschleunigungskräften zuverlässig seinen Zweck erfüllt.

Bei einer bevorzugten Ausführungsform wirkt ein Ende des Abspannelements mit einer Spanneinrichtung zusammen, die eingerichtet ist, das Abspannelement gespannt zu halten. Die notwendige Länge des Abspannelementes ändert sich beim Verstellen des Sitzes, beispielsweise aus einer aufrechten Position heraus in eine Sitz-Liegeposition. Diese Längendifferenz muss ausgeglichen werden, um eine sichere Funktion des Abspannelementes zu gewährleisten. Die Spanneinrichtung wirkt dabei mit dem Ende des Abspannelementes zusammen, das keine Rückhaltekräfte bzw. Trägheitskräfte zum Abspannen bzw. Sichern der Sitzfläche oder der Rückenlehne halten muss, und sorgt dafür, dass bei einem Verstellen des Sitzwinkels in eine erste Richtung keine Gurtlosen entstehen und trotzdem beim Verstellen des Sitzwinkels in eine zweite entgegengesetzte Richtung genügend Gurtabschnitt zur Verfügung steht. Dadurch, dass das Abspannelement immer zu einem gewissen Grad durch die Spanneinrichtung auf der Nicht-Belastungsseite des Sperrelements gespannt ist, kann insbesondere im Zusammenwirken mit einer Gurt- oder Seilbremse als Sperrelement auch sichergestellt werden, dass das Sperrelement grundsätzlich automatisch sperrt und die Gurt- oder Seilbremse zu einem Lösen immer aktiv betätigt werden muss. Bei einem vollständigen Zusammenfalten des Sitzes kann das Abspannelement ggf. auch ganz ausgeklinkt werden.

Die Spanneinrichtung kann bei einer Ausführungsform durch ein Zugfeder- oder Torsionsfederelement gebildet sein. Es sind aber auch andere Spanneinrichtungen denkbar, wie beispielsweise ein federelastischer Gurt. Entscheidend ist, dass die Spanneinrichtung das Abspannelement auf Zug halten kann und der Sitz dennoch in verschiedene Positionen überführt werden kann.

Bei einer besonders bevorzugten Ausführungsform ist die Spanneinrichtung als Aufrollmechanismus ausgebildet, in dem das Seil oder der Gurt aufgenommen ist. Beispielsweise kann ein Torsionsfederelement dafür sorgen, dass der Gurt um eine Achse herum stets aufgewickelt bzw. abgewickelt wird, wenn die Sitzposition verändert wird. Dadurch ist das Abspannelement sehr platzsparend aufbewahrt und ein Verheddern oder Verknoten wird verhindert. Außerdem kann der Gurt derart lang sein, dass nicht nur eine Einstellung verschiedener Winkel für die Sitzfläche oder Rückenlehne möglich ist, sondern Rückenlehne und Sitzfläche vollständig aufeinander geklappt werden können.

Bei einer weiteren bevorzugten Ausführungsform ist ein Ende des Abspannelements unmittelbar an der Strebe befestigt. Dabei handelt es sich insbesondere um das Ende, welches die Rückhaltekräfte bzw. Trägheitskräfte zum Abspannen bzw. Sichern der Sitzfläche oder der Rückenlehne halten muss. Dies kann beispielsweise mittels einer Schlaufe und/oder einer Naht realisiert sein, wobei auch Knoten, Nieten oder Schrauben zur Befestigung denkbar sind. Es ist auch denkbar, dass das Abspannelement lösbar an der Strebe befestigt ist, so dass es bei Bedarf abnehmbar ist. Dies kann beispielsweise durch Rast-, Steck-, Klemm- oder sonstige Verbindungen realisiert sein, so lange diese hinreichend belastbar und somit sicher sind. Auch eine mittelbare Befestigung des Abspannelements an der Strebe ist denkbar. So kann an der Strebe eine Kupplung befestigt sein, in die ein Ende des Abspannelements eingeklinkt werden kann.

Bei einer weiteren Ausführungsform ist das Einstellen des Winkels von Sitzfläche und Rückenlehne in mindestens zwei Positionen durch einen Rastmechanismus ermöglicht. Dies kann beispielsweise durch einrastbare Gelenke oder Kulissen in einem Führungselement erfolgen. Selbstverständlich sind auch mehr als zwei Positionen denkbar.

Bei einer bevorzugten Ausführungsform weist der modulare Sitz eine Handhabe zum Lösen des Sperrelements und/oder des Rastmechanismus auf, wobei die Handhabe insbesondere eingerichtet ist, bei Betätigung das Sperrelement und den Rastmechanismus gleichzeitig zu lösen. Durch ein Loslassen der Handhabe kann die Rückenlehne anschließend wieder festgestellt werden, indem der Rastmechanismus in der neuen Position einrastet und das Abspannelement wieder gesichert wird. Dadurch kann mit einer Handbewegung die Rückenlehne in ihrer Position verstellt werden. Entsprechendes gilt für eine Verstellung der Position der Sitzfläche.

Bei einer solchen Ausführungsform ist es vorteilhaft, wenn die Handhabe derart eingerichtet ist, sich bei Loslassen automatisch in eine Ruheposition, in der das Sperrelement und der Rastmechanismus gesperrt sind, zurückzustellen. Dies kann beispielsweise durch eine geeignete Wahl der Rastelemente und/oder entsprechende Führungen erfolgen, die den Rastmechanismus aus einer Zwischenposition in eine Ruheposition zwingen. Auch kann die Handhabe selbst mit einer Rückstellfeder ausgebildet sein, so dass sie automatisch aus einer Betätigungsposition in eine Ruheposition zurückgestellt wird, so dass der Rastmechanismus und das Sperrelement in einer gleichen Position sperren bzw. einrasten.

Die Erfindung betrifft auch einen Fahrradanhänger mit einem erfindungsgemäßen modularen Sitz.

Der oben beschriebene erfindungsgemäße modulare Sitz eignet sich insbesondere für Anhänger für Fahrräder und Pedelecs und für Transportfahrräder, welche zum Transport von Personen, insbesondere Kindern vorgesehen sind, aber auch für Lastenfahrräder, die einen Ladebereich und/oder eine Fahrgastzelle aufweisen.

Im Folgenden wird die Erfindung anhand von Figuren, in denen bevorzugte Ausführungsbeispiele der Erfindung dargestellt sind, näher erläutert.

Es zeigen:
- Fig. 1: eine Skizze zu einem erfindungsgemäßen modularen Sitz in einer Seitenansicht;
- Fig. 2: eine Skizze des gleichen modularen Sitzes wie in Fig. 1 in einer Rückansicht;
- Fig. 3: einen Längsquerschnitt durch den modularen Sitz der Figur 1;
- Fig. 4: eine Detailansicht der Spanneinrichtung und des Führungselements des modularen Sitzes der Figur 1;
- Fig. 5: eine schematische Darstellung einer selbsthemmenden Gurtbremse; und
- Fig. 6a und 6b: jeweils eine perspektivische Ansicht des modularen Sitzes der Figur 1.

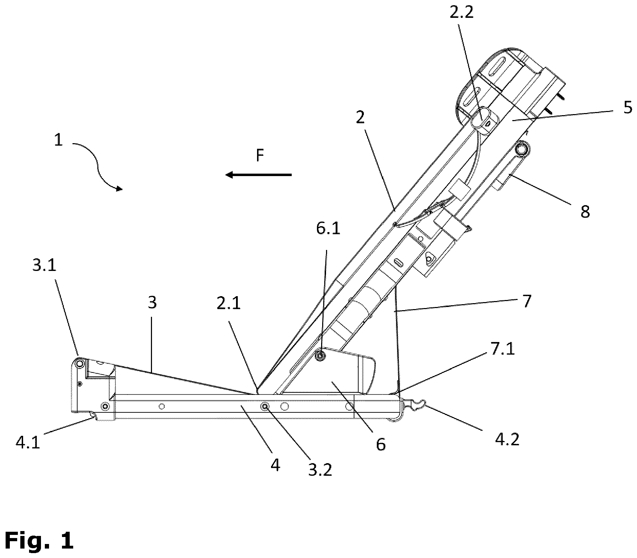

Figur 1 zeigt einen erfindungsgemäßen modularen Sitz 1 in einer Seitenansicht. Der Sitz 1 weist eine Rückenlehne 2 und eine Sitzfläche 3 auf. Unterhalb der Sitzfläche 3 und der Rückenlehne 2 weist der Sitz einen U-förmigen Rahmen 4 bestehend aus mehreren Streben auf. Zusätzlich weist der Sitz 1 ein festes Rückenteil 5 auf. In dem Ausführungsbeispiel sind sowohl die Rückenlehne 2 als auch die Sitzfläche 3 jeweils durch eine gespannte Matte aus einem Textil gebildet und über Aufhängungspunkte 2.1, 2.3, 3.1, 3.2 am Rahmen 4 bzw. am Rückenteil 5 befestigt. Das Rückenteil 5 ist verschwenkbar mittels eines Gelenks 6.1 an Führungselementen 6 gelagert, welche an den seitlichen Streben des Rahmens 4 befestigt, insbesondere mit diesem verschraubt, sind.

Das Rückenteil 5 und somit die Rückenlehne 2 sind mittels eines Sicherungselementes 7 an einer Strebe des Rahmens 4 gegengelagert. Im Ausführungsbeispiel ist das Sicherungselement 7 ein Abspannelement in Form eines Gurtes, der mittels einer Schlaufe 7.1 an der rückwärtigen Strebe des Rahmens 4 befestigt ist. Auf diese Weise werden Beschleunigungskräfte F in Fahrrichtung über das Sicherungselement 7 in den Rahmen 4 umgeleitet, so dass die Rückenlehne 2 insbesondere im Falle eines Unfalls gegen ein ungewolltes Nach-Vorne-Klappen gesichert ist. Der Rahmen 4 ist über Befestigungspunkte 4.1, 4.2 lösbar mit dem Boden eines nicht dargestellten Fahrradanhängers verbunden.

Am Rückenteil 5 ist eine Handhabe 8 zum Lösen und Feststellen des Sicherungselements 7 angeordnet, so dass das Rückenteil 5 bzw. die Rückenlehne 2 bei betätigter Handhabe 8 über das Gelenk 6.1 verschwenkt werden kann. Somit kann der Sitzwinkel zwischen Rückenlehne 2 und Sitzfläche 3 verändert und an die jeweiligen Anforderungen angepasst werden.

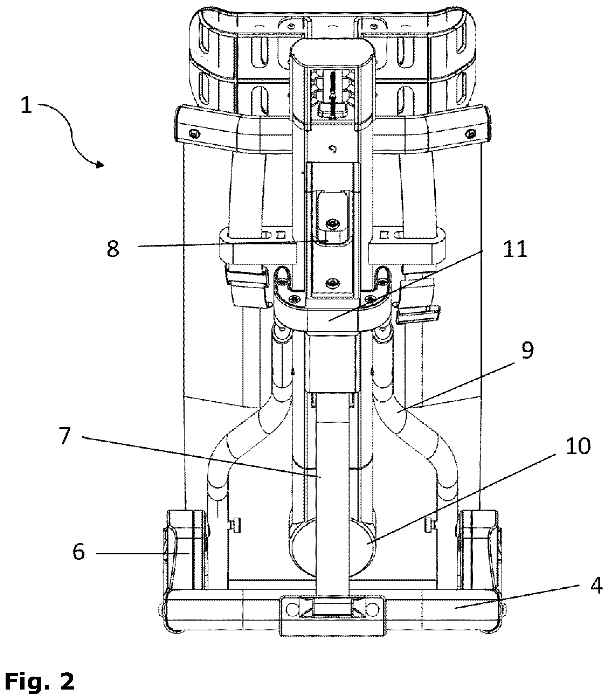

Figur 2 zeigt den erfindungsgemäßen modularen Sitz 1 in einer Rückansicht. Die Handhabe 8 weist ein Sperrelement 8.1 in Form einer Gurtbremse auf, die das Sicherungselement 7 beim Betätigen der Handhabe 8 freigibt. Beim Loslassen der Handhabe 8 ist die Gurtbremse wieder aktiviert und ist insbesondere selbstverstärkend bzw. selbsthemmend, d.h. die Sicherung wird fester, wenn das Sicherungselement insbesondere bei einem Unfall auf Zug belastet wird.

Damit die Rückenlehne 2 jederzeit durch das Sicherungselement 7 gesichert ist, muss das Sicherungselement 7 in jeder Sitzposition gespannt sein und darf kein nennenswertes Spiel gegenüber dem Rückenteil 5, bei der Verwendung von Gurten keine Gurtlosen, aufweisen. Um beim Verstellen der Rückenlehne 2 Gurtlosen zu verhindern, weist der modulare Sitz 1 eine Spanneinrichtung 10 auf. Im gezeigten Ausführungsbeispiel ist die Spanneinrichtung 10 durch einen Aufrollmechanismus mit einem Zug- oder Torsionsfederelement in Form einer Gurtrolle gebildet, welcher in der Lage ist, das Abspannelement auf Zug zu halten. Somit ist das Abspannelement beim Verstellen der Sitzposition jederzeit gespannt und Gurtlosen werden verhindert, so dass das Abspannelement das Rückenteil 5 auch in einer geänderten Position sichert. Außerdem bewirkt der Zug auf dem Abspannelement, dass das Sperrelement 1 aufgrund seiner selbsthemmenden Eigenschaften automatisch schließt.

Mit Betätigung der Handhabe 8 wird gleichzeitig ein Griffelement 11 mitgenommen. An dem Griffelement sind nicht dargestellte Seilzüge befestigt, die in den Rohren 9 geführt sind und mit einem Rastmechanismus der Führungselemente 6 in Wirkverbindung stehen. Dadurch wird beim Betätigen der Handhabe 8 gleichzeitig das Abspannelement gelöst und das Rückenteil 5 hinsichtlich seiner Position freigegeben, so dass der Sitzwinkel des modularen Sitzes 1 mit einer Handbewegung eingestellt und wieder gesichert werden kann.

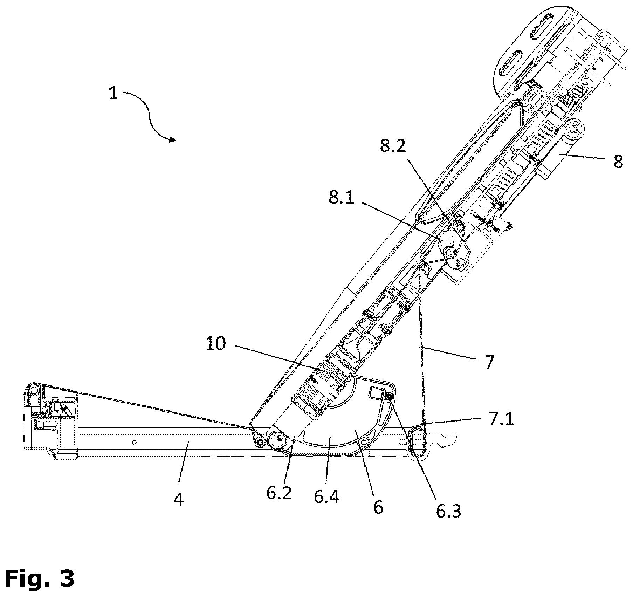

Figur 3 zeigt einen Querschnitt durch einen erfindungsgemäßen modularen Sitz 1, bei dem die Führung des Abspannelementes innerhalb des Rückenteils 5 zu sehen ist. Das Abspannelement bzw. der Gurt ist mittels der Schlaufe 7.1 an einer Strebe des Rahmens 4 befestigt und auf Spannung gehalten.

Die Handhabe 8 betätigt ein lösbares Sperrelement 8.1 zum Feststellen des Sicherungselements 7. Bei der Betätigung der Handhabe 8 wird das Sperrelement 8.1 und somit das Sicherungselement 7 gelöst. Beim Loslassen der Handhabe 8 wird das Sperrelement 8.1 wieder fixiert und das Sicherungselement 7 somit festgestellt, so dass die Sicherung der Rückenlehne 2 in der neuen Position wieder gewährleistet ist.

Ebenfalls in der Figur 3 dargestellt ist der Rastmechanismus der Führungselemente 6. Die Rastelemente werden beim Betätigen der Handhabe 8 aus den Rastpositionen 6.2 bzw. 6.3 herausbewegt und sind während des Verstellens des Rückenteils 5 innerhalb der Führung 6.4 geführt. Durch das Loslassen der Handhabe 8 können die Rastelemente in der jeweils neuen Position 6.2, 6.3 wieder einrasten, so dass das Rückenteil 5 in der neuen Position arretiert ist. Das Lösen bzw. das Arretieren des Rückenteils 5 und das Lösen bzw. das Feststellen des Abspannelementes erfolgen gleichzeitig. Im Ausführungsbeispiel sind zwei Positionen möglich, nämlich eine Sitzposition 6.2 und eine zusammengeklappte Position 6.3, beispielsweise zum Herausnehmen und Lagern des Sitzes 1. Selbstverständlich können weitere Positionen im Rastmechanismus vorgesehen sein, die zum Beispiel auch eine Sitz-Liegeposition mit deutlich weiter geneigter Rückenlehne ermöglichen.

Durch die selbsthemmende Funktion des Sperrelements 8.1 ist die Rückenlehne 2 im Falle eines Unfalls besonders effektiv gegen ein Verstellen gesichert. Der Gurt ist über die Umlenkrolle 8.2 geführt und an einem Ende mit der Spanneinrichtung 10 verbunden. Die Spanneinrichtung 10 ist in dem Beispiel durch einen Aufrollmechanismus in Form einer Gurtrolle gebildet, die den überschüssigen Gurtabschnitt aufnimmt bzw. den benötigten Gurtabschnitt beim Verstellen des Rückenteils 5 freigibt. Gurtlosen werden somit verhindert.

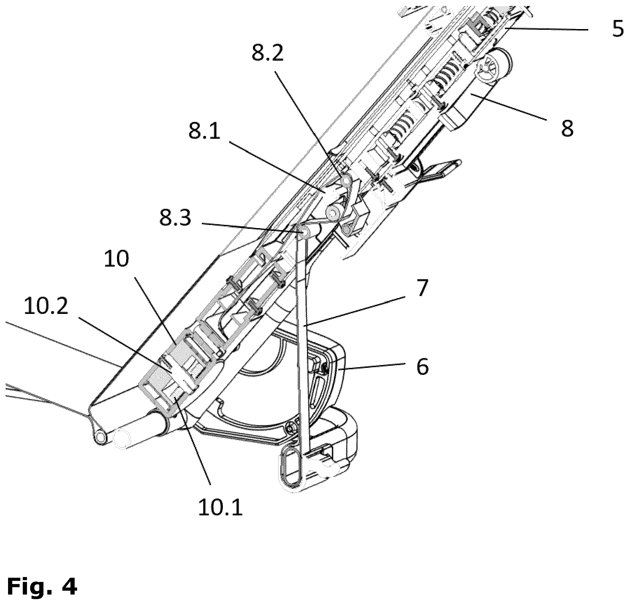

Figur 4 zeigt eine Detailansicht der Spanneinrichtung 10 und des Führungselements 6. Der Gurt ist mittels der ortsfesten Rollen 8.2 und 8.3 geführt. Zwischen den Rollen 8.2, 8.3 ist das Sperrelement 8.1 zum Feststellen des Gurtes angeordnet, die zusammen mit den Rollen 8.2, 8.3 eine Gurtbremse bildet. Damit beim Verstellen des Rückenteils keine Gurtlosen entstehen, ist der Gurt nach der Rolle 8.2 in der Spanneinrichtung 10 in Form einer Gurtrolle um eine Achse 10.2 aufgerollt. Die Spanneinrichtung 10 weist ein Torsionsfederelement 10.1 auf. Das Torsionsfederelement 10.1 sorgt dafür, dass der um die Achse 10.2 aufgerollte Gurt stets unter Zug gehalten ist. Wird das Rückenteil 5 in Fahrrichtung nach hinten bewegt, wird der überschüssige Gurtabschnitt um die Achse 10.2 gewickelt. Wird das Rückenteil 5 in die entgegengesetzte Richtung, also in Fahrtrichtung nach vorne verstellt, so gibt die Spanneinrichtung 10 einen benötigten zusätzlichen Gurtabschnitt frei. Auf diese Weise steht immer genau der benötigte Gurtabschnitt zur Verfügung, der für die Sicherung des Rückenteils 5 benötigt wird.

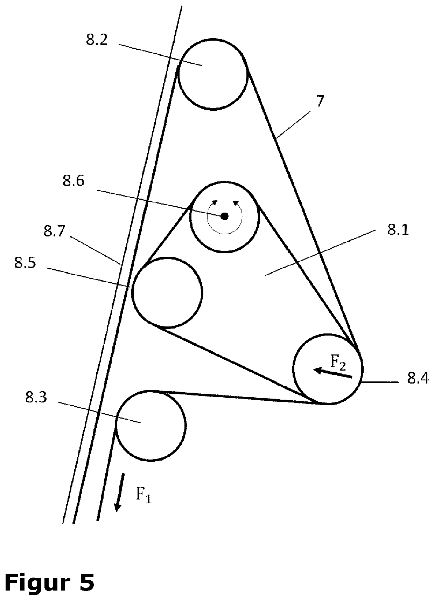

Figur 5 zeig eine schematische Darstellung einer selbsthemmenden Gurtbremse. In der gezeigten Position befindet sich die Gurtbremse in einer neutralen Position, bei der keine nennenswerte Zugspannung F₁ an dem Gurt 7 anliegt. Die Gurtbremse weist zwei ortsfest gelagerte Rollen 8.2, 8.3 auf, die um die eigene Achse rotieren können. Das Sperrelement 8.1 ist an einer Achse 8.6 rotierbar gelagert. Wenn das Rückenteil 5, insbesondere im Falle eines Unfalls, in Fahrtrichtung nach vorn beschleunigt wird, wirkt eine mitunter erhebliche Zugkraft F₁ auf das Absperrelement 7. Diese Zugkraft wird über die ortsfeste Rolle 8.3 umgelenkt und wirkt an einem Auflagepunkt 8.4 auf das Sperrelement 8.1 mit der Kraft F₂. Der Auflagepunkt kann ebenfalls als Rolle ausgebildet sein. Durch die Kraft F₂ rotiert das Sperrelement 8.1 um die Achse 8.6 und kommt etwa bei einem Anlagepunkt 8.5 zur Anlage und verklemmt den Gurt zwischen einem Gehäusewandabschnitt 8.7 und dem Sperrelement 8.1. Je größer die Zugkraft F₁ ist, desto stärker ist die Klemmwirkung und somit die Sicherung des Abspannelementes 7.

Das Sperrelement 8.1 ist somit selbsthemmend. Bei Betätigung der Handhabe 8 wird das Sperrelement 8.1 mit der in der Figur 5 nicht dargestellten Handhabe 8 mitgenommen und gibt den Gurt somit frei, so dass das Rückenteil 5 in eine neue Position überführt werden kann. Gleiches gilt für den Fall, dass der Gurt 7 durch ein Spannelement wie beispielsweise einen Aufrollmechanismus gespannt gehalten wird, auch wenn die dann wirkenden Kräfte deutlich geringer sind.

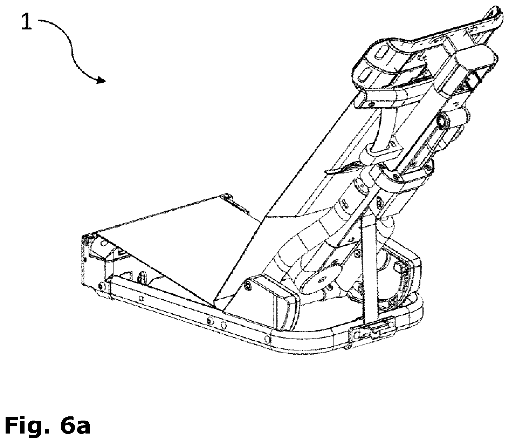

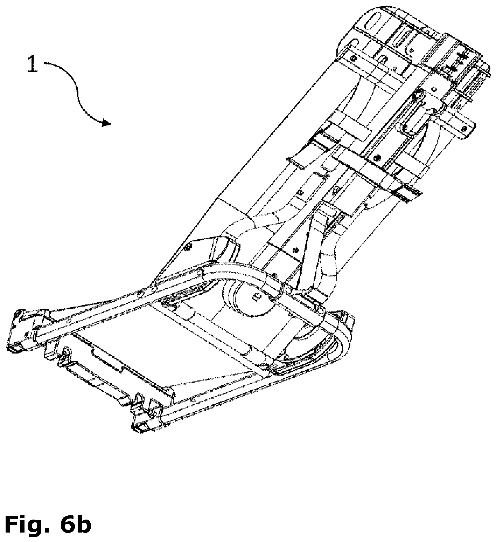

Zum besseren Verständnis und zur Übersicht sind in den Figuren 6a und 6b jeweils perspektivische Ansichten des erfindungsgemäßen modularen Sitzes 1 dargestellt.

## Patentansprüche

1. Modularer Sitz (1) für ein Leichtfahrzeug oder einen Anhänger dafür, mit einer Sitzfläche (3) und einer Rückenlehne (2), deren Winkel zueinander einstellbar ist, und mit Elementen zum Befestigen des Sitzes (1) im Leichtfahrzeug oder dem Anhänger, sowie mit mindestens einem auf Zug belastbaren Sicherungselement (7), mit dem die Rückenlehne (2) und/oder die Sitzfläche (3) gegen ein Auslenken in mindestens einer Richtung gesichert werden können, **gekennzeichnet durch** eine oder mehrere sich unterhalb der Sitzfläche (3) und/oder der Rückenlehne (2) erstreckende Streben, wobei das Sicherungselement (7) mittelbar oder unmittelbar an einer der Streben gegengelagert ist.

2. Modularer Sitz (1) nach Anspruch 1, **dadurch gekennzeichnet, dass** die Streben einen u-förmigen oder geschlossenen Rahmen (4) bilden, wobei am Rahmen (4) Befestigungspunkte (4.1, 4.2) zum Befestigen des Rahmens (4) im Fahrzeug vorgesehen sind.

3. Modularer Sitz (1) nach Anspruch 1 oder 2, **gekennzeichnet durch** ein lösbares Sperrelement (8.1) zum Feststellen des Sicherungselements (7).

4. Modularer Sitz (1) nach einem der vorstehenden Ansprüche, **dadurch gekennzeichnet, dass** das Sicherungselement (7) ein Abspannelement, insbesondere ein Seil oder ein Gurt, ist.

5. Modularer Sitz (1) nach Anspruch 4, **dadurch gekennzeichnet, dass** das Sperrelement (8.1) einen selbsthemmenden Mechanismus aufweist und insbesondere in der Art einer Gurt- oder Seilbremse ausgeführt ist.

6. Modularer Sitz (1) nach Anspruch 4 oder 5, **dadurch gekennzeichnet, dass** ein Ende des Abspannelements mit einer Spanneinrichtung (10) zusammenwirkt, die eingerichtet ist, das Abspannelement gespannt zu halten.

7. Modularer Sitz (1) nach Anspruch 6, **gekennzeichnet durch** ein Zugfeder- oder Torsionsfederelement (10.1) als Spanneinrichtung (10), mit dem das Abspannelement auf Zug gehalten werden kann.

8. Modularer Sitz (1) nach Anspruch 7, **gekennzeichnet durch** einen Aufrollmechanismus als Spanneinrichtung (10), in dem das Seil oder der Gurt aufgenommen ist.

9. Modularer Sitz (1) nach einem der Ansprüche 4 bis 8, **dadurch gekennzeichnet, dass** ein Ende des Abspannelements unmittelbar an der Strebe befestigt ist.

10. Modularer Sitz (1) nach einem der vorstehenden Ansprüche, **gekennzeichnet durch** einen Rastmechanismus, der das Einstellen des Winkels von Sitzfläche (3) und Rückenlehne (2) in mindestens zwei Positionen ermöglicht.

11. Modularer Sitz (1) nach Anspruch 4 oder einem der darauf rückbezogenen Ansprüche 5 bis 10, **gekennzeichnet durch** eine Handhabe (8) zum Lösen des Sperrelements (8.1) und/oder des Rastmechanismus, wobei die Handhabe (8) insbesondere eingerichtet ist, bei Betätigung das Sperrelement (8.1) und den Rastmechanismus gleichzeitig zu lösen.

12. Modularer Sitz (1) nach Anspruch 10, **dadurch gekennzeichnet, dass** die Handhabe (8) derart eingerichtet ist, sich bei Loslassen automatisch in eine Ruheposition, in der das Sperrelement (8.1) und der Rastmechanismus gesperrt sind, zurückzustellen.

13. Fahrradanhänger mit einem modularen Sitz (1) gemäß einem der vorstehenden Ansprüche.
